(19) Europäisches Patentamt
European Patent Office
Office européen des brevets

(11) **EP 3 285 334 A1**

(12) **EUROPEAN PATENT APPLICATION**

(43) Date of publication:
**21.02.2018 Bulletin 2018/08**

(51) Int Cl.:
**H01Q 21/06** (2006.01)  **H01Q 3/30** (2006.01)
**H01Q 1/24** (2006.01)

(21) Application number: **16184190.3**

(22) Date of filing: **15.08.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Nokia Solutions and Networks Oy**
**02610 Espoo (FI)**

(72) Inventor: **Hallivuori, Juha Samuel**
**33820 Tampere (FI)**

(74) Representative: **Borgström, Markus**
**Nokia Solutions and Networks GmbH & Co. KG**
**T&I IPR Patent Administration**
**St.-Martin-Straße 76**
**80240 München (DE)**

Remarks:
Amended claims in accordance with Rule 137(2) EPC.

(54) **BEAMFORMING ANTENNA ARRAY**

(57) There is provided an apparatus comprising: an antenna array for generating radio beams, the antenna array comprising antenna element sub-groups and each antenna element sub-group comprising a plurality of antenna elements; signal input means for providing an input signal to each antenna element sub-group and to the plurality of antenna elements within each antenna element sub-group via electrical connections, wherein the plurality of antenna elements within each antenna element sub-group are consecutively electrically connected to each other such that the input signal is configured to be inputted, within each antenna element sub-group, to at least one antenna element via at least one other antenna element; and phase shift means for shifting a phase of the input signal between the consecutively electrically connected antenna elements within each antenna element sub-group.

Fig. 2

# EP 3 285 334 A1

**Description**

TECHNICAL FIELD

The invention relates to communications. More particularly, the present invention relates to beamforming.

BACKGROUND

In a communication network, beam transmission may be beneficial in transferring information. Providing solutions enhancing the beamforming may be beneficial for the operation of the communication network. Solutions making the used antenna array structure simplified may be an example of one such solution.

BRIEF DESCRIPTION

According to an aspect, there is provided the subject matter of the independent claims. Some embodiments are defined in the dependent claims.
One or more examples of implementations are set forth in more detail in the accompanying drawings and the description below. Other features will be apparent from the description and drawings, and from the claims.

BRIEF DESCRIPTION OF DRAWINGS

In the following embodiments will be described in greater detail with reference to the attached drawings, in which

    Figure 1 illustrates an example cellular communication system to which embodiments of the invention may be applied;
    Figure 2 illustrates an apparatus according to an embodiment;
    Figures 3A to 3D illustrate the apparatus according to some embodiments;
    Figure 4 illustrates an apparatus according to an embodiment;
    Figures 5A to 5E illustrate apparatuses according to some embodiments;
    Figures 6 and 7 illustrate flow diagrams of methods according to some embodiments; and
    Figure 8 illustrates an apparatus according to an embodiment.

DETAILED DESCRIPTION OF SOME EMBODIMENTS

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments.
Embodiments described may be implemented in a radio system, such as in at least one of the following: Worldwide Interoperability for Micro-wave Access (WiMAX), Global System for Mobile communications (GSM, 2G), GSM EDGE radio access Network (GERAN), General Packet Radio Service (GRPS), Universal Mobile Telecommunication System (UMTS, 3G) based on basic wideband-code division multiple access (W-CDMA), high-speed packet access (HSPA), Long Term Evolution (LTE), and/or LTE-Advanced.
The embodiments are not, however, restricted to the system given as an example but a person skilled in the art may apply the solution to other communication systems provided with necessary properties. Another example of a suitable communications system is the 5G concept. 5G is likely to use multiple input - multiple output (MIMO) techniques (including MIMO antennas), many more base stations or nodes than the LTE (a so-called small cell concept), including macro sites operating in co-operation with smaller stations and perhaps also employing a variety of radio technologies for better coverage and enhanced data rates. 5G will likely be comprised of more than one radio access technology (RAT), each optimized for certain use cases and/or spectrum. 5G mobile communications will have a wider range of use cases and related applications including video streaming, augmented reality, different ways of data sharing and various forms of machine type applications, including vehicular safety, different sensors and real-time control. 5G is expected to have multiple radio interfaces, namely below 6GHz, cmWave and mmWave, and also being integradable with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, below 6GHz - cmWave - mmWave). One of the concepts considered to be used in 5G networks is network slicing in which multiple independent and dedicated virtual sub-networks (network instances) may be created within the same infrastructure to run services that have different requirements on latency, reliability, throughput and mobility. It should be appreciated that future networks will most probably utilize network functions virtualization (NFV) which is a network architecture concept that proposes virtualizing network node functions into "building blocks" or entities that may be operationally connected or linked together to provide services. A virtualized network function (VNF) may comprise one or more virtual machines running computer program codes using standard or general type servers instead of customized hardware. Cloud computing or cloud data storage may also be utilized. In radio communications this may mean node operations to be carried out, at least partly, in a server, host or node operationally coupled to a remote radio head. It is also possible that node operations will be distributed among a plurality of servers, nodes or hosts. It should also be understood that the distribution of labor between core network operations and base station operations may differ from that of the LTE or even be non-existent. Some other technology advancements probably to be used are Software-Defined Networking (SDN), Big Data, and all-IP, which may change the way networks are being constructed and managed.

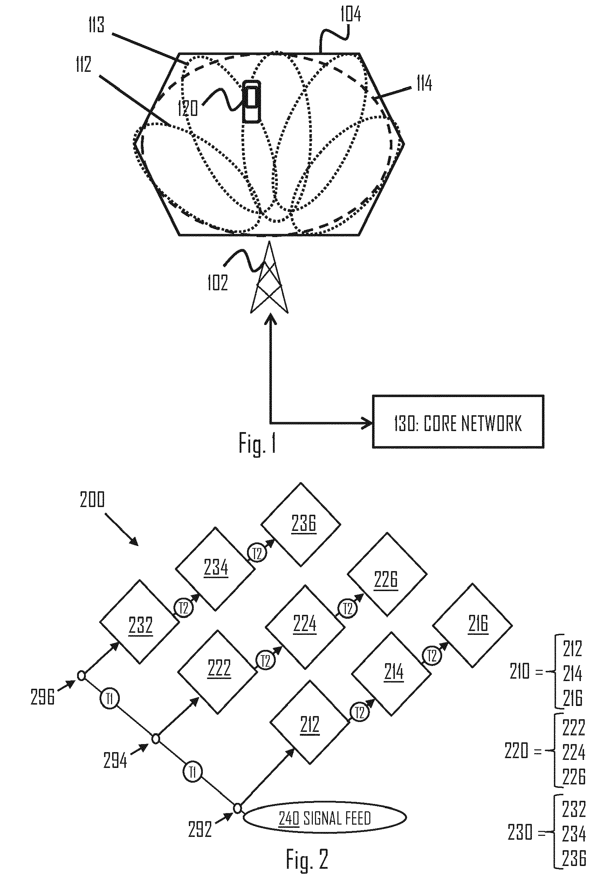

Some embodiments of the present invention may be applied to a cellular communication system applying beamforming to transmissions in a cell. Figure 1 illustrates an example of such a cellular communication system. Cellular radio communication networks, such as the Long Term Evolution (LTE), the LTE-Advanced (LTE-A) of the 3rd Generation Partnership Project (3GPP), or the predicted 5G solutions, are typically composed of at least one network element, such as a network node 102, providing a cell 104. The cell 104 may be, e.g., a macro cell, a micro cell, femto, or a pico-cell, for example. The network node 110 may be an evolved Node B (eNB) as in the LTE and LTE-A, a radio network controller (RNC) as in the UMTS, a base station controller (BSC) as in the GSM/GERAN, or any other apparatus capable of controlling radio communication and managing radio resources within the cell 104. For 5G solutions, the implementation may be predicted to be similar to LTE-A, as described above. The network node 102 may be a base station or an access node. The cellular communication system may be composed of a radio access network of network nodes similar to the network node 102, each controlling a respective cell or cells. Thus, in some embodiments, the cellular system of Figure 1 may comprise a plurality of network nodes providing cellular services. However, such system may not be necessary for benefits of the invention.

The network node 102 may be further connected via a core network interface to a core network 130 of the cellular communication system. In an embodiment, the core network 130 may be called Evolved Packet Core (EPC) according to the LTE terminology. The core network 130 may comprise a mobility management entity (MME) and a data routing network element. In the context of the LTE, the MME tracks mobility of the terminal devices 120 and carries out establishment of bearer services between the terminal devices 120 and the core network 130. In the context of the LTE, the data routing network element may be called a System Architecture Evolution Gateway (SAE-GW). It may be configured to carry out packet routing to/from the terminal devices 120 from/to other parts of the cellular communication system and to other systems or networks, e.g. the Internet.

As described above, the network node 102 may employ beamforming in transmission of radio signals in the cell 104. As known in the field of wireless communications, beamforming also called spatial filtering refers to directional transmission or reception. The steering of a radio beam may be achieved through digital and/or analog signal processing techniques and use of multiple antenna elements forming an antenna array. For example, the steering may be achieved by combining elements in a phased antenna array in such a way that signals at particular angles experience constructive interference while others experience destructive interference. Beamforming can be used in a transmitter and/or in a receiver in order to achieve spatial selectivity. The spatial selectivity results in improvement compared with omnidirectional transmission/reception, wherein the improvement is called transmit/receive gain.

In some embodiments, the network node 102 may employ two types of radio beams: a first type of radio beam 114 that covers substantially the whole cell 104); and a second type of radio beam 112, 113 that covers a portion of the cell 104. When the cell 104 is a sector-type of cell amongst a plurality of sectors established by the network node 102, the first type of radio beam may be called a sector beam. Conventionally, cellular communication systems rely on the first type of radio beams for control plane transmissions (downlink synchronization, broadcast, antenna-port based common reference signals, etc.) and reception (e.g. random access channel, RACH). A system operating on higher carrier frequencies, such as a 5G system, may require higher antenna gain which may be achieved by using radio beams of the second type. In order to support cell sizes with inter-site distance of tens to hundreds meters, both common control and user plane related signaling may utilize radio beams that are narrower than the sector-wide radio beam. The second type of radio beam may provide a solution to such a situation. In general it may be said that present cellular communication systems and probably future communication systems offer multiple opportunities to improve connection speeds by utilizing beamforming.

As explained, the radio beams may be formed by an apparatus (e.g. beamforming apparatus comprised in the network node 102 or the network node 102) utilizing digital and/or analog signal processing. One aspect of utilizing analog signal processing may be the complexity of the system required. Further, at the network node side (i.e. network node 102) the complexity may be, at least sometimes, handled. However, at the user side (e.g. the terminal device 120) complexity may pose an implementation obstacle, and therefore beamforming antennas at the user side are usually mechanically tunable such that the steering of the beam direction is done at the installation phase only. To tackle at least some of these problems, there is provided an apparatus and a method for beamforming. The apparatus and the method are suitable for both uplink and downlink communication. However, the simplicity of the solution may be particularly beneficial for the user side (i.e. the terminal device 120 (may also be referred to as UE 120 at least in some embodiments). Further, the present solution may be particularly suitable for analog signal processing.

The terminal device 120 may be and/or comprise cellphones, tablets, laptops, computers, smart phones, user hand-held devices or wearable devices. Hence, the terminal device 120 may be used by user to transfer data in and out from the device. In some embodiments, the terminal device 120 comprises a customer end device, such as a cellular communication network device configured to cooperate with the cellular communication network. Thus, for example, the cellular communication network device may be a device that is configured to be installed to home or office and further configured to transfer data with said network and/or with other terminal devices. Thus, the cellular communication network device may be a relay device or a router configured to transfer data with said network and/or with cellphones and tablets, for example. Said cellular communication network device may provide a small cell. Said small cell may be part of and/or cooperate with the cellular communication network. Such small cell can be used, for example, in a home or office environment to enhance service for one or more terminal devices. According to an embodiment with reference to Figure 2, there is provided an apparatus 200 comprising: an antenna array for generating radio beams, the antenna array comprising antenna element sub-groups 210, 220, 230 (i.e. at least two antenna element sub-groups) and each antenna element sub-group 210, 220, 230 comprising a plurality of antenna elements 212, 214, 216, 222, 224, 226, 232, 234, 236; signal input means (e.g. signal feed element 240 or electrical connections between a signal input and the antenna elements) for providing an input signal to each antenna element sub-group 210, 220, 230 and to the plurality of antenna elements within each antenna element sub-group 210, 220, 230 via electrical connections, wherein the plurality of antenna elements within each antenna element sub-group are consecutively electrically connected to each other such that the input signal is configured to be inputted, within each antenna element sub-group, to at least one antenna element via at least one other antenna element (e.g. via antenna element 212 to antenna element 214, and via antenna elements 212, 214 to antenna element 216); and phase shift means (phase shift elements T1 and/or T2) for shifting a phase of the input signal between the consecutively electrically connected antenna elements within each antenna element sub-group 210, 220, 230.

According to an embodiment, referring to Figure 2, the apparatus 200 comprises an antenna array for generating radio beams, the antenna array comprising antenna element sub-groups 210, 220, 230 (shown in Figure 2 to comprise three antenna elements each), wherein the antenna element sub-groups 210, 220, 230 are electrically connected in parallel manner to each other, and wherein antenna elements within each antenna element sub-group 210, 220, 230 are electrically connected in consecutive manner (e.g. antenna elements 212, 214, 216 of antenna element sub-group 210 are connected consecutively in Figure 2). The apparatus 200 may further comprise a signal feed element 240 for providing an input signal to the antenna array, the signal feed element 240 configured to provide the input signal to each of the antenna element sub-groups 210, 220, 230 via the parallel electrical connection and to each antenna element within each antenna element sub-group 210, 220, 230 via the consecutive electrical connection between the antenna elements within each sub-group 210, 220, 230. The apparatus 200 may further comprise at least one first phase shift element T1 electrically connected between the signal feed element 240 and at least one antenna element sub-group 210, 220, 230 and configured to shift phase of the input signal inputted to said at least one antenna element sub-group 210, 220, 230. Further, the apparatus 200 may comprise a plurality of second phase shift elements T2 electrically connected between the consecutively connected antenna elements 212, 214, 216, 222, 224, 226, 232, 234, 236 and configured to shift phase of the input signal within each of the antenna element sub-groups 210, 220, 230 between the consecutively connected antenna elements 212, 214, 216, 222, 224, 226, 232, 234, 236.

It needs to be understood that the consecutive electrical connection (e.g. galvanic connection) between the antenna elements within each sub-group 210, 220, 230 can be, in a way, understood as serial electrical connection. This may mean that the input signal is inputted via other antenna elements to some other antenna elements as shown in Figure 2. For example, antenna elements 212, 214, 216 are serially connected signal-wise, such that the input signal is inputted to antenna element 212, via antenna element 212 to antenna element 214, and via antenna elements 212, 214 to antenna element 216. The phase shift elements T2 (also referred to as second phase shift elements) may shift the phase of the input signal so that the phase of the input signal may be different for each antenna element 212, 214, 216.

For example looking at Figure 2, the second phase shift elements T2 are configured to shift phase of the input signal between the antenna elements 212 and 214 and between antenna elements 214 and 216, to name a couple of examples. For example, the first phase shift elements T1 of Figure 2 may be configured to shift phase of the input signal inputted to the antenna element sub-groups 220 and 230. Further, the input signal inputted to the antenna element sub-group 230 may travel via two first phase shift elements T1. Later we will see how this may affect the signal phases and beamforming in the system. However, it needs to be noted that the first phase shift elements T1 may in some embodiments be used in a different way to achieve the benefits of the invention. Therefore, later we will show different examples of how to arrange the phase shift elements T1, T2 in the apparatus 200.

The apparatus 200 of Figure 2 may be, at least in some embodiments, referred to as a radio beamforming apparatus or a beamforming apparatus. In an embodiment, the apparatus 200 comprises or is comprised in a terminal device, such as the terminal device 120. In an embodiment, the apparatus 200 comprises or is comprised in a network node, such as the network node 102.

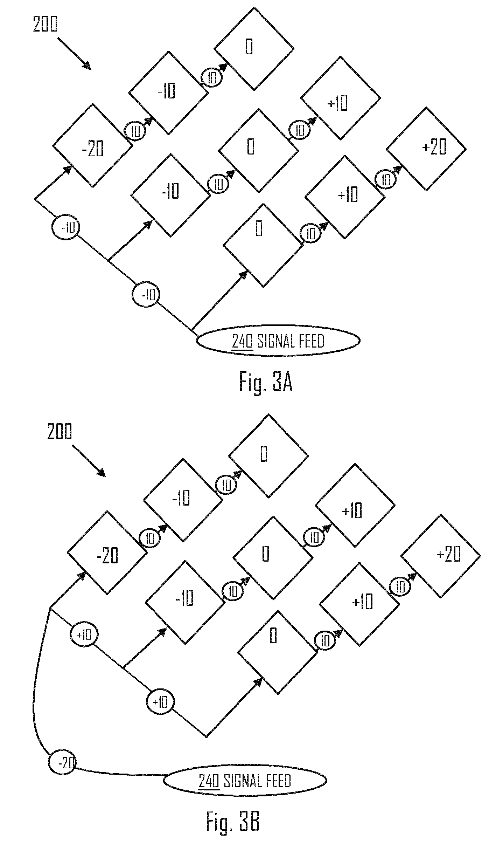

The apparatus 200 of Figure 2 may provide a novel structure that allows analog beamforming that can be used for both Tx and Rx operation. For example, using the described structure it may be possible to have at least 5 different phase values for the inputted signal. Thus, directional radio beam(s) can be achieved when the input signal is outputted accordingly. Let us look at one example shown in Figure 3A in which the phase shift value of the first phase shift element(s) is chosen to be -10 degrees (deg) and the phase shift value of the second phase shift elements is chosen to be +10 degrees (deg). Further, the same structure as shown in Figure 2 is utilized, but may not be necessary for the proposed solution. That is, the solution may be suitable for, for example, four antenna elements in two sub-groups as will be described later in more detail.

Let us further discuss some examples how the different antenna elements may be arranged within the antenna array. In one example, the antenna elements may be physically arranged in a line so that the horizontal beaming of the antenna array may be further enhanced. In another example, the antenna elements may be arranged into a plurality of lines (i.e. lines and columns). Let us bear in mind that the electrical connection between the sub-groups and the antenna elements may still be how it is described although a different kind of physical arranging of the antenna elements would be employed. In one preferable solution, nine antenna elements maybe suitable to be arranged in two or more lines such that the lines are at least partially overlapping. That is, arranging the antenna elements in a diamond-like formation may benefit the described serial-parallel electrical connection between the antenna elements. In one diamond-like formation, top and bottom rows would have one antenna element, middle row would have three antenna elements, and rows between the middle row and top row and middle row and bottom row would each have two antenna elements. Other structures may also be possible: for example, the antenna array may comprise two rows each having two antenna elements, three rows each having two antenna elements, four rows each having three antenna elements, four rows each having four antenna elements, to name a few examples. In general, the antenna array may have X rows at least partially on top of each other, wherein each row comprises one or more antenna elements (number per row may vary), wherein X may be a positive integral number (e.g. 1, 2, 3, 4, and so on).

Still referring to Figure 2, the parallel connected sub-groups 210, 220, 230 may be in galvanic connection with each other. That is, the lines shown with arrows may connect the sub-groups 210, 220, 230 to each other in parallel manner. However, in some embodiments, serial connection between the sub-groups may also be used meaning that the input signal may be inputted to a sub-group via at least one other sub-group. Further, the antenna elements within a sub-group may be in galvanic connection with each other. Therefore, also the consecutive electrical connection between the antenna elements may be galvanic. Galvanic connection may be achieved using, for example, conducting wire or conductor (e.g. copper wire). Any means that are able to transmit signal to the antenna elements may be used. The phase shift elements T1, T2 may also be in galvanic connection with the conducting wire. For example, conducting wire between the antenna elements 212, 214 may be galvanically connected to the second phase shift element T2 (shown in Figure 2 between the antenna elements 212, 214). Thus, when the input signal transfers from the antenna element 212 to the antenna element 214 in the example of Figure 2 via the conducting element or wire, it transfers via the second phase shift element T2 (signal phase is shifted).

The signal feed element 240 may comprise a signal port for receiving the input signal that is to be transferred to the antenna elements shown in Figure 2. The signal feed element 240 may acquire the input signal (e.g. radio frequency (RF) signal) and transfer it to the antenna elements. The antenna elements may then resonate the input signal accordingly as electromagnetic energy via air interface. Thus, the radiated electromagnetic energy may be received by a receiver via the air-interface.

To further explain the transmittance of the input signal (e.g. RF signal), it may need to be understood how the input signal is distributed in points 292-296 of Figure 2. That is, the parallel connection between the sub-groups 210, 220, 230 may require performing power splitting. One way to do this may be to use Wilkinson type power divider. However, any conventional type of power dividing may be used as long as the input signal can be inputted into each of the sub-groups 210, 220, 240. It is clear to a skilled person how the power splitting can be achieved in different examples and embodiments of the invention.

Further, the consecutive electrical connection between the antenna elements may require that the antenna elements are suitable for such serial connection. Basic suitable structure may be a patch antenna element where an RF signal or input signal can be fed in from one edge of the patch antenna element, and outputted from an adjacent edge of the patch antenna element. That is in general, RF signal or the input signal should be inputted from one edge of the antenna element (e.g. antenna element 212) and outputted from another edge (e.g. opposite side) of said antenna element to be inputted to the next antenna element (e.g. antenna element 214).

Referring to Figure 3A, we can see that the inputted signal from the signal feed element 240 may have initially a phase shift of zero (0) degrees (it could potentially be already phase shifted if needed). However, using the first and second phase shift elements T1, T2, the input signal's phase may be changed. Thus, the phase shift of the input signal inputted to the first antenna element sub-group 210 may be zero degrees. Thus, the phase shift of the input signal inputted to the second antenna element sub-group 220 may be -10 degrees. Thus, the phase shift of the input signal inputted to the third antenna element sub-group 230 may be -20 degrees. Within each sub-group 210, 220, 230 the second phase shift elements T2 may further shift the phase of the input signal. Thus, the first antenna element sub-group 210 may comprise three antenna elements to which the input signal is inputted having different phases as shown in Figure 3A (i.e. 0 degrees phase shift, +10 degrees phase shift, and +20 degrees phase shift). Using this approach for each of the sub-groups 210, 220, 230 may result in inputting the input signal with -20 degrees phase shift to one antenna element, with -10 degrees phase shift to two antenna elements, with 0 degrees phase shift to three antenna elements, with +10 degrees phase shift to two antenna elements, and finally with +20 degrees phase shift to one antenna element. Therefore, in this example, total of five different phase shift values of the input signal may be outputted by the antenna elements. However, this should be understood as an example, and it may be possible to use different phase shift values with the first and/or second phase shift elements.

In an embodiment, the at least one first phase shift element T1 has a first phase shift value and the second phase shift elements T2 each have a second phase shift value. The first and second phase shift values may be of different size. One example of this was shown in Figure 3A in which the first phase shift values was -10 degrees and the second phase shift value was +10 degrees. Naturally, other values may be used. For example, the second phase shift value could be +5 degrees and the first phase shift value could be -5 degrees.

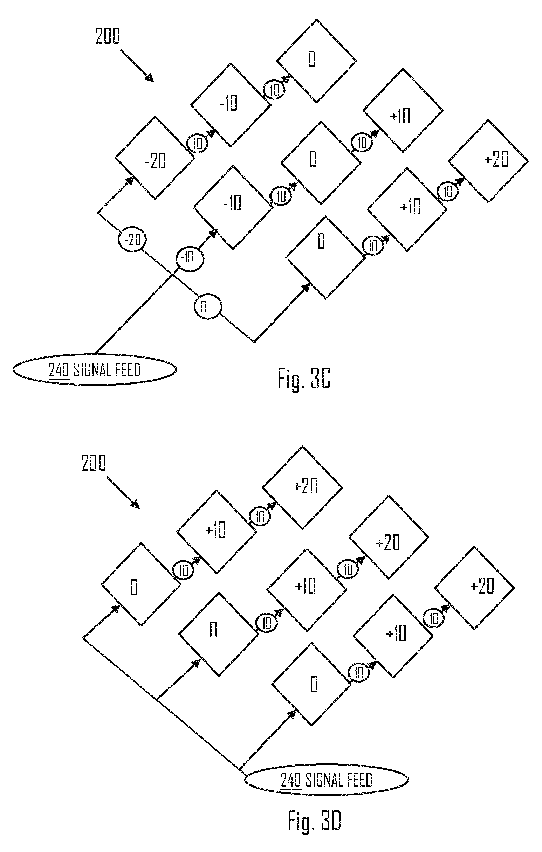

In an embodiment, with reference to Figure 3B, the plurality of phase shift elements (e.g. phase shift means) comprise at least one first phase shift element and a plurality of second phase shift elements. In the example of Figure 3B, the phase shift of the second phase shift elements may be 10 degrees and the phase shift of the first phase shift element may be -20 degrees. Thus, connecting the antenna element sub-groups with the signal feed element 240 as shown in Figure 3B, the resulting phase shifts in the antenna elements may be similar as in the example of Figure 3A. Therefore, there can be a number of different ways to perform the connection between the antenna element sub-group (and also within antenna element sub-groups) to achieve the benefits the invention. Another example may be shown in Figure 3C in which the first phase shift value is -10 degrees and second phase shift value is 10 degrees. The resulting antenna array in Figures 3A to 3C may be substantially similar with different ways of connecting the antenna sub-groups to the signal input element 240. So in general, different phase shift values may be used than shown in the embodiments of Figures 3A to 3D, for example. In some embodiments, phase shift value for each phase shift element is configurable. Thus, when, for example, 9 phase shift elements are used, there may be one or nine different phase shift values. In an embodiment, two different phase shift values are used.

Figure 3D illustrates yet another embodiment of the invention. As an example, phase shift values are illustrated, but as said before, may differ from the illustrated values. However, the general idea in the antenna array of Figure 3D may be that the phase shifts of the antenna elements of the antenna array do not need to be symmetrically arranged as, for example, in Figures 3A to 3C. Therefore, for example, the input signal may be zero phased on the left-most antenna element and +20 degrees phased on the right-most antenna element. However, using the example of Figure 3D, needed beam steering may also be achieved at least for some use cases. Further, in the example of 3D there are now phase shift elements between the signal input and the sub-groups (e.g. phase shift elements T2). However, such elements could also be used. In such case, the T2 value should be selected such that a needed a non-symmetrical phase shift values for the antenna array would be acquired.

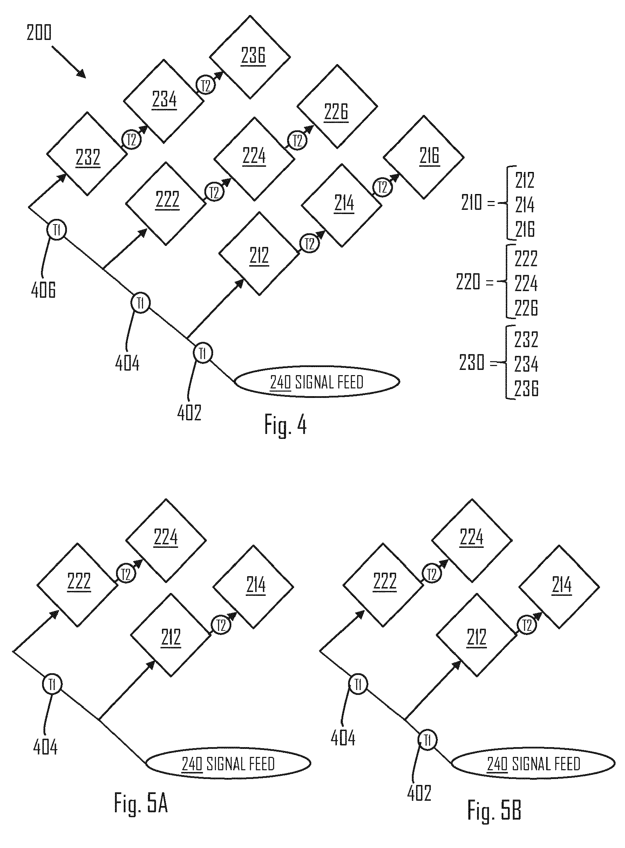

Figure 4 illustrates the apparatus 200 according to an embodiment. Referring to Figure 4, the apparatus 200 comprises a plurality of first phase shift elements T1 (i.e. at least two first phase shift elements T1) configured to shift phase of the input signal for at least two of the antenna element sub-groups 210, 220, 230. The plurality of first phase shift elements will now be referred to as the plurality of first phase shift elements 402, 404, 406 as shown in Figure 4. Thus, in an embodiment, there may be a first phase shift element 402 between the signal feed element 240 and the sub-groups 210, 220, 230 as shown in Figure 4. Further, there may be total of three first phase shift elements 402, 404, 406. Thus, for each sub-group 210, 220, 230 there may be a corresponding first phase shift element 402, 404, 406. Looking at the embodiment of Figure 2, it may be seen that there may be less first phase shift elements than shown in Figure 4.

In an embodiment, the plurality of first phase shift elements 402, 404, 406 are arranged such that one first phase shift element 402 is connected between the signal feed element 240 and the at least one antenna element sub-group 210, 220, 230 and another first phase shift element 404 is connected between said one first phase shift element 402 and at least one antenna element sub-group 220, 230. Further if there are three sub-groups 210, 220, 230 as in Figure 4, there may a further first phase shift element 406 connected between said another first phase shift element 404 and the sub-group 230. Thus, before the input signal from the signal feed 240 reaches the antenna element 232, the first phase shift elements 402, 404, 406 may each have shifted the phase of the input signal in a serial manner. For example, if T1's value is -10 degrees, the inputted signal to the antenna element 232 may be -30 degrees phase shifted compared to the inputted signal by the signal feed element 240.

In an embodiment, with reference to Figures 2 and 4, the at least one first phase shift element T1 is configured such that phase of the input signal is different for each of the antenna element sub-groups 210, 220, 230. That is, as it is shown in Figure 3A for example, the phase of the input signal may be different between sub-groups when the input signal is inputted into the sub-groups 210, 220, 230. This may be achieved using one or more first phase shift elements. For example, if there are only two sub-groups (e.g. Figure 5A), the phase of the input signal may be different for each of the sub-groups 210, 220 by using only one first phase shift element T1. However, if there are at least three sub-groups 210, 220, 230, at least two first phase shift elements T1 may be beneficial to be used (examples in Figure 3A and Figure 4).

In an embodiment, the antenna element sub-groups 210, 220, 230 are electrically connected to each other in parallel. Examples of this may be seen in Figures 2, 3A to 3C, and 4, for example.

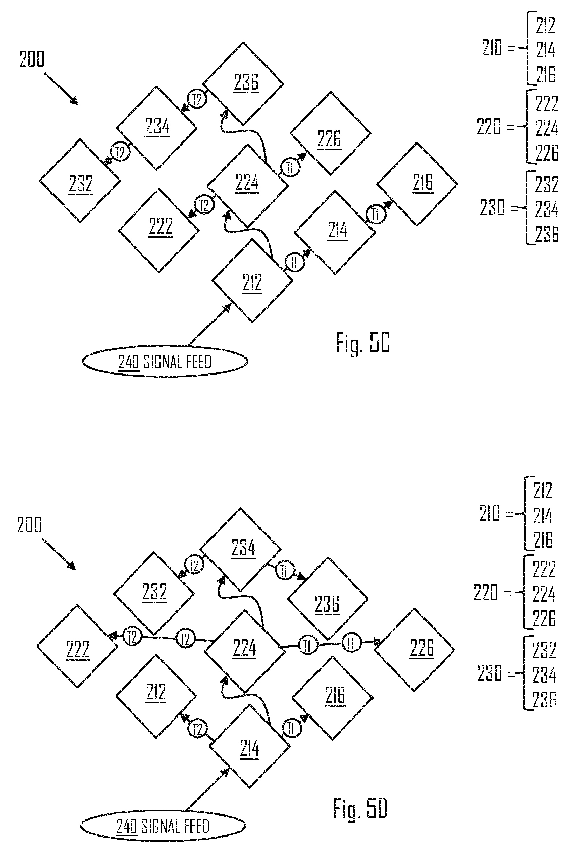

In an embodiment, phase shift means (e.g. the first and second phase shift elements) are further configured to shift phase of the input signal for at least one antenna element sub-group. Examples of this may be seen in Figures 2, 3A to 3C, and 4, for example. In Figures 5C and 5D opposite examples may be shown, wherein for each sub-group the phase of the input signal is essentially the same, but the phase shift within each sub-group is then performed.

In an embodiment, the phase shift means are further configured to perform a first phase shift of the input signal for a first antenna element sub-group 220 and a second phase shift of the input signal for a second antenna element sub-group 230, the first and second phase shifts being of different size. Examples of this may be seen in Figure 2, for example. That is, the phase of the input signal inputted to sub-group 220 may be different than the phase of the input signal inputted to sub-group 230. For sub-group 210 phase shift is not performed in the example of Figure 2 thus resulting in a different phase of the input signal.

In an embodiment, the phase shift means comprise a plurality of phase shift elements (e.g. T1 and/or T2) for shifting the phase of the input signal for the antenna element sub-groups 210, 220, 230, said plurality of phase shift elements arranged such that at least one phase shift element 404 is configured to perform the first phase shift, and said at least one phase shift element 404 coupled with at least one other phase shift element 406 are arranged to perform the second phase shift. One example of this can be seen in Figure 4. Another may be seen in Figure 2 in which two T1 phase shift elements are serially connected to change the phase of the input signal. Thus, the second phase shift may be understood as being a multi-phase phase shift in which the shift of the input signal may be shifted two or more times.

In an embodiment, the phase shift means are configured such that a phase of the input signal is different for each antenna element sub-groups 210, 220, 230. Examples of this may be seen in Figures 2, 3A to 3C, and 4, for example.

In an embodiment, the phase shift means are configured to shift phase of the input signal between each consecutively electrically connected antenna element 212, 214, 216 within each antenna element sub-group 210, 220, 230. Examples of this may be seen in Figures 2, 3A to 3C, and 4, for example. E.g. second phase shift elements T2 shown in Figure 2 and/or 4.

In an embodiment, the phase shift means are configured such that the phase of the input signal is different for each antenna element 212, 214, 216 within an antenna element sub-group 210, 220, 230. Examples of this may be seen in Figures 2, 3A to 3C, and 4, for example. This may mean that antenna elements within one sub-group each have inputted with an input signal having a different phase. However, within the antenna array there may be antenna elements inputted with an input signal having the same phase (e.g. between sub-groups).

In an embodiment, with reference to Figures 2 and 4, the plurality of the second phase shift elements T2 is configured to shift phase of the input signal between each serially connected antenna element. This may mean that there is at least one second phase shift element T2 between each serially connected antenna element. Taking sub-group 210 as an example, there is a second phase shift element between the antenna element 212 and the antenna element 214, and another second phase shift element between the antenna element 214 and the antenna element 216. Similar logic may apply to each sub-group 210, 220, 230. This may enable that the input signal has a different phase for each antenna element within a sub-group.

In an embodiment, the plurality of the second phase shift elements T2 is configured to shift phase of the input signal such that phase of the input signal inputted to the serially connected antenna elements within an antenna element sub-group is different for each of said antenna elements. Thus for example, phase of the input signal inputted to the antenna elements 212, 214, 216 would be different for each antenna element. Example of this can be seen in Figure 3A, for example. In Figure 3A, the phase of the input signal is different for each of the antenna elements within a sub-group.

Figures 5A to 5B illustrate some embodiments. Referring to Figures 5A to 5B, it is noted that the solution may work with only four antenna elements 212, 214, 222, 224. That is, in an embodiment, the antenna array comprises at least four antenna elements 212, 214, 222, 224 arranged into two antenna element sub-groups 210, 220 (i.e. sub-group 210 comprises elements 212, 214 and sub-group 220 comprises elements 222, 224). As shown in Figure 5A, the solution may work with only one first phase shift element 404. In such case, it may be beneficial to arrange the first phase shift element 404 such that inputted signal has a different phase when inputted into the sub-groups 210 and 220. That is, the phase of the input signal may be different when inputted to the sub-group 210 compared with inputting the signal to the sub-group 220. This may be due to the position of the first phase shift element 404. As shown in Figure 5B, also two first phase shift elements 402, 404 can be used. In both examples and/or embodiments, there may be a second phase shift element T2 between each serially connected antenna element (e.g. between antenna elements 212 and 214; and between antenna elements 222 and 224).

In an embodiment, the sub-groups 210, 220 are inputted with an input signal having the same phase. Thus, there may not be phase shift element before the input signal enters antenna elements 212, 222. In such case, it may be beneficial to arrange the T1 phase shift element between the antenna elements 222 and 224 instead of using two T2 phase shift elements. Thus, the antenna elements 212 and 222 could output the input signal with first phase (e.g. 0 degrees), antenna element 214 could output input signal with second phase (e.g. 0 + T2, e.g. -10 degrees) and antenna element 224 could output input signal with third phase (e.g. 0 + T1, e.g. +10 degrees). This kind of approach may also be applicable to antenna arrays comprising more than four antenna elements.

In an embodiment (one example shown in Figure 5A), the phase shift means of the apparatus 200 comprise at least one first phase shift element T1 configured to shift phase of the input signal for at least one antenna element sub-group 220 and a plurality of second phase shift elements T2 configured to shift phase of the input signal between the consecutively electrically connected antenna elements 212, 214 and 222, 224, the at least one first phase shift element T1 having a first phase shift value (e.g. -10 degrees) and each second phase shift element T2 having a second phase shift value (e.g. +10 degrees), wherein the first and second phase shift values are of different size.

In an embodiment (one example shown in Figure 5A) the antenna array comprises at least a first antenna element sub-group 210 and a second antenna element sub-group 220, the first antenna element sub-group 210 comprising at least a first antenna element 212 and a second antenna element 214, the second antenna element sub-group 220 comprising at least a third antenna element 222 and a fourth antenna element 224, wherein the signal input means 240 are configured to input the input signal to the first and second antenna element sub-groups 210, 220, the first and second antenna elements 212, 214 being consecutively electrically connected such that the input signal is configured to be inputted to the first antenna element 212 and to the second antenna element 214 via the first antenna element 212, and the third and fourth antenna elements 222, 224 being consecutively electrically connected such that the input signal is configured to be inputted to the third antenna element 222 and to the fourth antenna element 224 via the third antenna element 222, and wherein the phase shift means T1, T2 are configured to shift phase of the input signal between the first and the second antenna elements 212, 214 such that the phase of the input signal configured to be inputted to the first antenna element 212 is different compared with the phase of the input signal configured to be inputted to the second antenna element 214, and such that the phase of the input signal configured to be inputted to the third antenna element 222 is different compared with the phase of the input signal configured to be inputted to the fourth antenna element 224.

In an embodiment, the phase shift means T1, T2 are configured such that the phase of the input signal configured to be inputted to the first antenna element sub-group 210 is different compared with the phase of the input signal configured to be inputted to the second antenna element sub-group 220.

In an embodiment, the phase of the input signal configured to be inputted to the first antenna element 212 is equal to the phase of the input signal configured to be inputted to the fourth antenna element 224.

Figures 5C and 5D illustrate some embodiments in which the input signal is inputted to the sub-groups without shifting the phase between the sub-groups. That is, the phase of the input signal for each sub-group 210, 220, 230 may be the same. Referring to Figure 5C, the sub-groups 210, 220, 230 may be arranged to be consecutively electrically connected to each other as shown in the Figure 5C. Thus, the input signal may be inputted to antenna element 212 of sub-group 210. Then the input signal may be inputted to antenna element 224 of sub-group 220 via antenna element 212. Then the input signal may be inputted to antenna element 236 of sub-group 230 via antenna elements 212, 224. In each of the sub-groups 210, 220, 230 the input signal may be further inputted to each antenna element in a consecutive manner described above. However, the phase shift elements T1, T2 may be used such that the T1 phase shift elements are used within the sub-group 210, T2 phase shift elements are used with the sub-group 230, and both T1 and T2 phase shift elements are used with the sub-group 220. In an embodiment, T1 and T2 phase shift elements perform a different size phase shift.

Referring to Figure 5D, another example of the apparatus 200 is shown. As illustrated, the needed phase shift may also be achieved using both T1 and T2 with each sub-group. Also, phase shift elements T1 and/or T2 may be linked to each other to achieve a needed phase shift for the input signal (e.g. input signal for antenna element 226 and antenna element 222).

In an embodiment, phase shift value of the T1 phase shift element(s) is additive inverse of phase shift value of the T2 phase shift value. For example, if T1 performs a +10 degrees phase shift, T2 performs a -10 degrees phase shift. For example, if T1 performs a +20 degrees phase shift, T2 performs a -20 degrees phase shift.

In an embodiment, with reference to Figures 2 and 4, the antenna array comprises at least nine antenna elements arranged into three antenna element sub-groups 210, 220, 230.

In an embodiment, the apparatus 200 is a terminal device (e.g. terminal device 120) of a cellular communication system. In an embodiment, the apparatus 200 is comprised in a terminal device of a cellular communication system.

In an embodiment, the phase shift means (e.g. first and/or second phase shift elements T1, T2) are configured to cause the phase shifting of the input signal by causing delay to the input signal. Different types of delays may be used. The first and second phase shift elements T1, T2 may be sometimes referred also to as the first and second delay elements T1, T2. In some embodiments, the first and second phase shift elements T1, T2 each comprise one or more capacitors. Further, digital processing (e.g. one or more digital components, such as digital circuitry) may be used to together with the one or more capacitors to cause delay to the input signal so that the delayed (or phase shifted) input signal may be inputted to the antenna element(s) with appropriate phase shift.

In an embodiment, the apparatus 200 comprises a controller for controlling phase shift means (e.g. the first and second phase shift elements T1, T2). The controller may change the first and/or second phase shift values of the first and/or second phase shift elements T1, T2. Thus, the direction of the beam(s) may be changed. So as explained, the input signal may be an RF signal that is to be transmitted via air-interface to one or more receivers. To achieve wanted beam direction, the first and/or second phase shift values of the first and second phase shift elements T1, T2 may need to be modified or controlled. For example, in the example of Figure 3A, the selected phase shift values (i.e. T1 = -10 deg, T2 = +10 deg) would result in +10 degree angled beam to right. In general, beam directing using a plurality of antenna elements and a plurality of phase shift element may be known, but the solution presented herein is novel compared to known solutions.

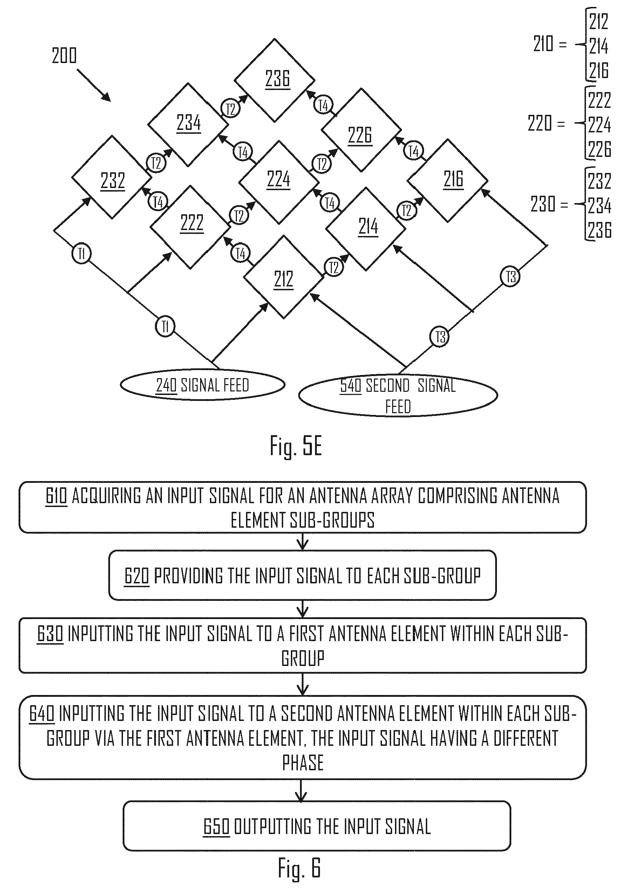

Figure 5E illustrates the apparatus 200 according to yet another embodiment. Referring to Figure 200, apparatus 200 may be configured to output a radio beam having two or more polarizations. Thus, the antenna array may be inputted with at least another input signal having a different polarization compared with the input signal inputted via the signal feed element 240. Said another input signal may be inputted via a second signal feed element 540 of the apparatus 200, for example. The polarization difference between the two input signals may be, for example, 45 degrees or 90 degrees. In an embodiment, the apparatus comprises second phase shift means T3, T4 for shifting the phase of the second input signal. The second phase shift means may be similar to the phase shift means described above. Thus, for example, T1 may equal to T3 and T2 may equal to T4 in the example of Figure 5E. However, it may be possible that the T3 and T4 are of different size compared with T1 and T2 respectively. Using the same sized phase shifting may result in a needed direction of the radio beam(s). When polarization Multiple Input Multiple Output (MIMO) is used, patch antenna structure (i.e. antenna elements are patch antenna elements) may be beneficial. Therefore, in an embodiment, the antenna elements are patch antenna elements.

In an embodiment, the second input signal is inputted into each antenna element from a different side compared with the first input single (i.e. input signal from the signal feed element 240). The second input signal may further be outputted from an antenna element to the next antenna element from opposite side of the antenna element compared with the input. For example, the second input signal may be inputted into the antenna element 214 from one side and outputted to the antenna element 224 from the opposite side.

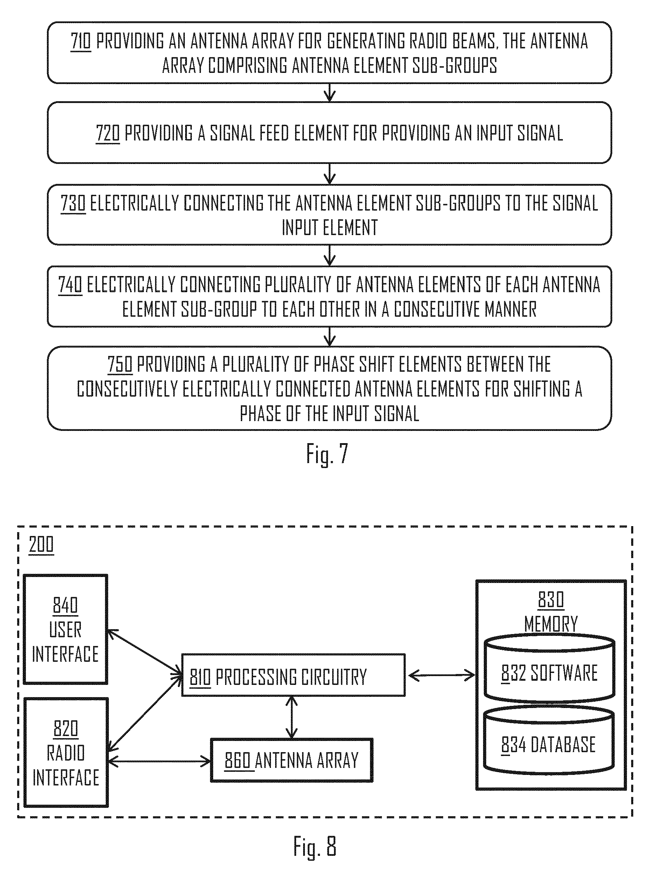

Figures 6 and 7 illustrates a flow diagram according to some embodiment. Referring to Figure 6, the method comprises: acquiring, by the apparatus 200, an input signal for an antenna array, the antenna array comprising antenna element sub-groups 210, 220, 230 and each antenna element sub-group 210, 220, 230 comprising a plurality of antenna elements (e.g. sub-group 210 comprising elements 212, 214, 216) (step 610); providing the input signal to each antenna element sub-group 210, 220, 230 (step 620); within each antenna element sub-group 210, 220, 230, inputting the input signal to a first antenna element of that antenna element sub-group (step 630); within each antenna element sub-group 210, 220, 230, inputting the input signal to a second antenna element of that antenna element sub-group via said first antenna element and shifting a phase of the input signal such that the phase of the input signal inputted to the second antenna element is different compared with the phase of the input signal inputted to the first antenna element (step 640); and outputting, via the antenna array, at least one radio beam according to the input signal (step 650).

Referring to Figure 7, a method for manufacturing an apparatus, such as the apparatus 200 is shown. Said method comprising: providing an antenna array for generating radio beams, the antenna array comprising antenna element sub-groups 210, 220, 230 and each antenna element sub-group comprising a plurality of antenna elements 212, 214, 216, 222, 224, 226, 232, 234, 236 (step 710); providing a signal input element 240 for providing an input signal to each antenna element sub-group 210, 220, 230 and to the plurality of antenna elements within each antenna element sub-group (step 720); electrically connecting the antenna element sub-groups 210. 220, 230 to the signal input element 240 (step 730); within each antenna element sub-group, electrically connecting the plurality of antenna elements to each other in a consecutive manner such that the input signal is configured to be inputted, within each antenna element sub-group, to at least one antenna element via at least one other antenna element (step 740); and providing a plurality of phase shift elements T1, T2 between the consecutively electrically connected antenna elements within each antenna element sub-group 210, 220, 230 for shifting a phase of the input signal (step 750).

Figure 8 illustrates a block diagram of the apparatus 200 according to an embodiment. Referring to Figure 8, the apparatus 200 may at least comprise an antenna array 860 comprising the antenna element sub-groups 210, 220, 230 (i.e. two or more sub-groups). Further, the apparatus 200 may comprise the signal feed element 240. The signal feed element 240 may be comprised in the antenna array 860 or in the radio interface 820 of the apparatus 200, for example.

In an embodiment, the apparatus 200 comprises a processing circuitry 810. The processing circuitry 810 may be configured to perform operations, such as control the first and/or second phase shift values of the antenna array 860. In an embodiment, the processing circuitry 810 comprises at least one processor. The at least one processor may be configured with at least one memory 830 comprising a computer program 832 to carry out one or more operations of the apparatus 200 (e.g. control the first and/or second phase shift values).

Referring to Figure 8, the memory 830 may be implemented using any suitable data storage technology, such as semiconductor based memory devices, flash memory, magnetic memory devices and systems, optical memory devices and systems, fixed memory and removable memory. The memory 830 may comprise a database 834 for storing data, such as predetermined values for the first and/or second phase shift values.

The apparatus 200 may further comprise radio interface (TRX) 820 comprising hardware and/or software for realizing communication connectivity according to one or more communication protocols. The TRX may provide the apparatus with communication capabilities to access the radio access network, for example. The TRX may provide the apparatus 200 connection to an X2 interface, for example. The TRX may comprise standard well-known components such as an amplifier, filter, frequency-converter, (de)modulator, and encoder/decoder circuitries and one or more antennas. Thus, in some embodiments, the antenna array 860 is comprised in the radio interface 820. However, they may also be separate, but configured to co-operate.

The apparatus 200 may also comprise user interface 840 comprising, for example, at least one keypad, a microphone, a touch display, a display, a speaker, etc. The user interface 840 may be used to control the respective apparatus by a user of the apparatus 200.

In an embodiment, the apparatus 200 may be or be comprised in a base station (also called a base transceiver station, a Node B, a radio network controller, or an evolved Node B, for example). The apparatus 1000 may be and/or be comprised in the network node 102, for example. In an embodiment, the apparatus 200 is comprised in the terminal device 120 or some other terminal device. In an embodiment, the apparatus 200 is a terminal device of a cellular communication network.

In an embodiment, the apparatus 200 comprises a printed circuit board (PCB) (e.g. dual layer PCB). The antenna elements (e.g. elements 212, 214, 216, 222, 224, 226, 232, 234, 236) and/or the phase shift elements T1, T2 may be printed on the PCB. Further, the signal feed element 240 may be at least partially printed on the PCB meaning that it may additionally comprise a signal port that is not printed. However, in some cases the signal feed element 240 may be printed on the PCB and connected to, for example, the processing circuitry 810 that may be configured to provide the input signal to the signal feed element 240. If further signal inputs and/or phase shift elements are used, they may also be printed on to the PCB.

Let us further discuss about split loss of the described apparatus 200. Split loss may be generally be calculated from the following equation:

$$\text{Split loss} = 10\text{Log}(\text{Pin}/\text{Pout}) = -10\text{Log}(1/N),\text{ wherein Pin equals to power at}$$

wherein Pin equals to power at SUM(Σ) port, Pout equals to power at any 1 of N outputs, and N equals to number of output ports. Therefore, the following table 1 may be formed:

Table 1. Split loss equalling to number of output ports.

| Output ports (N) | Split Loss (decibel (dB)) |
| --- | --- |
| 2 | 3.01 |
| 3 | 4.77 |
| 4 | 6.02 |
| 5 | 6.99 |
| 6 | 7.78 |
| 8 | 9.03 |
| 9 | 9.54 |

As table 1 indicates, the path loss in parallel construction is different compared to parallel/serial construction of which numerous examples are given above. For example, nine element parallel array (e.g. nine antenna elements are arranged in parallel with each other) would have some 10dB loss in each antenna element input. There may be some means to taper the powers, but generally the loss would be quite high. However, using the parallel/serial construction as shown for example in Figure 2, the path loss due to splitting may be made smaller. That is, using nine antenna elements and arranging them as in Figure 2, for example, the path loss would be about 4.77dB for the first row (i.e. elements 212, 222, 232) and additional about 3dB loss for the second row (i.e. elements 214, 224, 234) and further about 3dB additional loss for the last row (i.e. elements 216, 226, 236). The phase shifters (e.g. T1 and T2) may generate further path loss.

As used in this application, the term 'circuitry' refers to all of the following: (a) hardware-only circuit implementations, such as implementations in only analog and/or digital circuitry, and (b) combinations of circuits and soft-ware (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present. This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device.

In an embodiment, at least some of the processes described in connection with Figures 1 to 7 may be carried out by an apparatus comprising corresponding means for carrying out at least some of the described processes. Some example means for carrying out the processes may include at least one of the following: detector, processor (including dual-core and multiple-core processors), digital signal processor, controller, receiver, transmitter, encoder, decoder, memory, RAM, ROM, software, firmware, display, user interface, display circuitry, user interface circuitry, user interface software, display software, circuit, antenna, antenna circuitry, and circuitry. In an embodiment, the at least one processor, the memory, and the computer program code form processing means or comprises one or more computer program code portions for carrying out one or more operations according to any one of the embodiments of Figures 1 to 7 or operations thereof.

According to yet another embodiment, the apparatus carrying out the embodiments comprises a circuitry including at least one processor and at least one memory including computer program code. When activated, the circuitry causes the apparatus to perform at least some of the functionalities according to any one of the embodiments of Figures 1 to 7, or operations thereof.

At least some of the techniques and methods described herein may be implemented by various means. For example, these techniques may be implemented in hardware (one or more devices), firmware (one or more devices), software (one or more modules), or combinations thereof. For a hardware implementation, the apparatus(es) of embodiments may be implemented within one or more application-specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof. For firmware or software, the implementation can be carried out through modules of at least one chip set (e.g. procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

Embodiments as described may also be carried out in the form of a computer process defined by a computer program or portions thereof. Embodiments of the methods described in connection with Figures 1 to 7 may be carried out by executing at least one portion of a computer program comprising corresponding instructions. The computer program may be in source code form, object code form, or in some intermediate form, and it may be stored in some sort of carrier, which may be any entity or device capable of carrying the program. For example, the computer program may be stored on a computer program distribution medium readable by a computer or a processor. The computer program medium may be, for example but not limited to, a record medium, computer memory, read-only memory, electrical carrier signal, telecommunications signal, and software distribution package, for example. The computer program medium may be a non-transitory medium, for example. Coding of software for carrying out the embodiments as shown and described is well within the scope of a person of ordinary skill in the art. In an embodiment, a computer-readable medium comprises said computer program.

Even though the invention has been described above with reference to an example according to the accompanying drawings, it is clear that the invention is not restricted thereto but can be modified in several ways within the scope of the appended claims. Therefore, all words and expressions should be interpreted broadly and they are intended to illustrate, not to restrict, the embodiment. It will be obvious to a person skilled in the art that, as technology advances, the inventive concept can be implemented in various ways. Further, it is clear to a person skilled in the art that the described embodiments may, but are not required to, be combined with other embodiments in various ways.

**Claims**

1. An apparatus comprising:

    an antenna array for generating radio beams, the antenna array comprising antenna element sub-groups and each antenna element sub-group comprising a plurality of antenna elements;
    signal input means for providing an input signal to each antenna element sub-group and to the plurality of antenna elements within each antenna element sub-group via electrical connections,
    wherein the plurality of antenna elements within each antenna element sub-group are consecutively electrically connected to each other such that the input signal is configured to be inputted, within each antenna element sub-group, to at least one antenna element via at least one other antenna element; and
    phase shift means for shifting a phase of the input signal between the consecutively electrically connected antenna elements within each antenna element sub-group.

2. The apparatus of claim 1, wherein the antenna element sub-groups are electrically connected to each other in parallel.

3. The apparatus of claim 1 or 2, wherein the phase shift means are further configured to shift phase of the input signal for at least one antenna element sub-group.

4. The apparatus of claim 3, wherein the phase shift means are further configured to perform a first phase shift of the input signal for a first antenna element sub-group and a second phase shift of the input signal for a second antenna element sub-group, the first and second phase shifts being of different size.

5. The apparatus of claim 4, wherein the phase shift means comprise a plurality of phase shift elements for shifting the phase of the input signal for the antenna element sub-groups, said plurality of phase shift elements arranged such that at least one phase shift element is configured to perform the first phase shift, and said at least one phase shift element coupled with at least one other phase shift element are arranged to perform the second phase shift.

6. The apparatus of any preceding claim 1 to 5, wherein the phase shift means are configured such that a phase of the input signal is different for each antenna element sub-groups.

7. The apparatus of any preceding claim 1 to 6, wherein the phase shift means are configured to shift phase of the input signal between each consecutively electrically connected antenna element within each antenna element sub-group.

8. The apparatus of claim 7, wherein the phase shift means are configured such that the phase of the input signal is different for each antenna element within an antenna element sub-group.

9. The apparatus of any preceding claim 1 to 8, wherein the phase shift means comprise at least one first phase shift element configured to shift phase of the input signal for at least one antenna element sub-group and a plurality of second phase shift elements configured to shift phase of the input signal between the consecutively electrically connected antenna elements, the at least one first phase shift element having a first phase shift value and each second phase shift element having a second phase shift value, wherein the first and second phase shift values are of different size.

10. The apparatus of any preceding claim 1 to 9, wherein the antenna array comprises at least a first antenna element sub-group and a second antenna element sub-group, the first antenna element sub-group comprising at least a first antenna element and a second antenna element, the second antenna element sub-group comprising at least a third antenna element and a fourth antenna element,
    wherein the signal input means are configured to input the input signal to the first and second antenna element sub-groups, the first and second antenna elements of the first antenna element sub-group being consecutively electrically connected such that the input signal is configured to be inputted to the first antenna element and to the second antenna element via the first antenna element, and the third and fourth antenna elements of the second antenna element sub-group being consecutively electrically connected such that the input signal is configured to be inputted to the third antenna element and to the fourth antenna element via the third antenna element, and wherein the phase shift means are configured to shift phase of the input signal between the first and the second antenna elements such that the phase of the input signal configured to be inputted to the first antenna element is different compared with the phase of the input signal configured to be inputted to the second antenna element, and such that the phase of the input signal configured to be inputted to the third antenna element is different compared with the phase of the input signal configured to be inputted to the fourth antenna element.

11. The apparatus of claim 10, wherein the phase shift means are configured such that the phase of the input signal configured to be inputted to the first antenna element sub-group is different compared with the phase of the input signal configured to be inputted to the second antenna element sub-group.

12. The apparatus of claim 11, wherein the phase of the input signal configured to be inputted to the first antenna element of the first antenna element sub-group is equal to the phase of the input signal configured to be inputted to the fourth antenna element of the second antenna element sub-group.

13. The apparatus of any preceding claim 1 to 12, wherein the apparatus is comprised in a terminal device of a cellular communication system.

14. A method in an apparatus, the method comprising:

acquiring, by the apparatus, an input signal for an antenna array, the antenna array comprising antenna element sub-groups and each antenna element sub-group comprising a plurality of antenna elements;
providing the input signal to each antenna element sub-group;
within each antenna element sub-group, inputting the input signal to a first antenna element of that antenna element sub-group;
within each antenna element sub-group, inputting the input signal to a second antenna element of that antenna element sub-group via said first antenna element and shifting a phase of the input signal such that the phase of the input signal inputted to the second antenna element is different compared with the phase of the input signal inputted to the first antenna element; and
outputting, via the antenna array, at least one radio beam according to the input signal.

15. A method for manufacturing an apparatus, the method comprising:

providing an antenna array for generating radio beams, the antenna array comprising antenna element sub-groups and each antenna element sub-group comprising a plurality of antenna elements;
providing a signal input element for providing an input signal to each antenna element sub-group and to the plurality of antenna elements within each antenna element sub-group;
electrically connecting the antenna element sub-groups to the signal input element;
within each antenna element sub-group, electrically connecting the plurality of antenna elements to each other in a consecutive manner such that the input signal is configured to be inputted, within each antenna element sub-group, to at least one antenna element via at least one other antenna element; and
providing a plurality of phase shift elements between the consecutively electrically connected antenna elements within each antenna element sub-group for shifting a phase of the input signal.

**Amended claims in accordance with Rule 137(2) EPC.**

1. An apparatus comprising:

an antenna array for generating radio beams, the antenna array comprising antenna element sub-groups (210, 220, 230) and each antenna element sub-group (210, 220, 230) comprising a plurality of antenna elements (212, 214, 216, 222, 224, 226, 232, 234, 236);
signal input means (240, 540) for providing an input signal to each antenna element sub-group (210, 220, 230) and to the plurality of antenna elements within each antenna element sub-group via electrical connections,
wherein the plurality of antenna elements (212, 214, 216, 222, 224, 226, 232, 234, 236) within each antenna element sub-group (210, 220, 230) are consecutively electrically connected to each other such that the input signal is configured to be inputted, within each antenna element sub-group, to at least one antenna element via at least one other antenna element; and

phase shift means (T1, T2) for shifting a phase of the input signal between the consecutively electrically connected antenna elements within each antenna element sub-group (210, 220, 230),
**characterized in that** the signal input means (240, 540) are arranged to input the input signal having the same phase to each antenna element sub-group (210, 220, 230), and **in that** the apparatus further comprises means for controlling phase shift of the phase shift means (T1, T2).

2. The apparatus of claim 1, wherein the antenna element sub-groups (210, 220, 230) are electrically connected to each other in parallel.

3. The apparatus of any preceding claim 1 to 2, wherein the phase shift means (T1, T2) are configured to shift phase of the input signal between each consecutively electrically connected antenna element within each antenna element sub-group (210, 220, 230).

4. The apparatus of claim 3, wherein the phase shift means (T1, T2) are configured such that the phase of the input signal is different for each antenna element within an antenna element sub-group.

5. The apparatus of any preceding claim 1 to 4, wherein the antenna array comprises at least a first antenna element sub-group (210) and a second antenna element sub-group (220), the first antenna element sub-group (210) comprising at least a first antenna element (212) and a second antenna element (214), the second antenna element sub-group (220) comprising at least a third antenna element (222) and a fourth antenna element (224), wherein the signal input means (240, 540) are configured to input the input signal to the first and second antenna element sub-groups, the first and second antenna elements of the first antenna element sub-group being consecutively electrically connected such that the input signal is configured to be inputted to the first antenna element and to the second antenna element via the first antenna element, and the third and fourth antenna elements of the second antenna element sub-group being consecutively electrically connected such that the input signal is configured to be inputted to the third antenna element and to the fourth antenna element via the third antenna element, and wherein the phase shift means (T1, T2) are configured to shift phase of the input signal between the first and the second antenna elements such that the phase of the input signal configured to be inputted to the first antenna element (212) is different compared with the phase of the input signal configured to be inputted to the second antenna element (214), and such that the phase of the input signal configured to be inputted to the third antenna element (222) is different compared with the phase of the input signal configured to be inputted to the fourth antenna element (224).

6. The apparatus of any preceding claim 1 to 5, wherein the apparatus is comprised in a terminal device of a cellular communication system.

7. A method in an apparatus, the method comprising:

acquiring (610), by the apparatus, an input signal for an antenna array, the antenna array comprising antenna element sub-groups and each antenna element sub-group comprising a plurality of antenna elements;
providing (620) the input signal having the same phase to each antenna element sub-group;
within each antenna element sub-group, inputting (630) the input signal to a first antenna element of that antenna element sub-group;
within each antenna element sub-group, inputting (640) the input signal to a second antenna element of that antenna element sub-group via said first antenna element and shifting a phase of the input signal such that the phase of the input signal inputted to the second antenna element is different compared with the phase of the input signal inputted to the first antenna element, wherein the phase shift is controllable; and
outputting (650), via the antenna array, at least one radio beam according to the input signal.

8. A method for manufacturing an apparatus, the method comprising:

providing (710) an antenna array for generating radio beams, the antenna array comprising antenna element sub-groups and each antenna element sub-group comprising a plurality of antenna elements;
providing (720) a signal input element for providing an input signal, having the same phase, to each antenna element sub-group, and to the plurality of antenna elements within each antenna element sub-group;
electrically connecting (730) the antenna element sub-groups to the signal input element;
within each antenna element sub-group, electrically connecting (740) the plurality of antenna elements to each other in a consecutive manner such that the input signal is configured to be inputted, within each antenna element sub-group, to at least one antenna element via at least one other antenna element; and
providing (750) a plurality of phase shift elements between the consecutively electrically connected antenna elements within each antenna element sub-group for shifting a phase of the input signal, wherein the phase shift is controllable.

Fig. 1

130: CORE NETWORK

240 SIGNAL FEED

Fig. 2

$$210 = \begin{cases} 212 \\ 214 \\ 216 \end{cases}$$

$$220 = \begin{cases} 222 \\ 224 \\ 226 \end{cases}$$

$$230 = \begin{cases} 232 \\ 234 \\ 236 \end{cases}$$

200

-10

-20

-10

0

-10

-10

+10

0

0

+10

0

+10

+20

10

10

10

10

10

10

10

240 SIGNAL FEED

Fig. 3A

200

-10

-20

0

-10

+10

0

+10

0

0

+10

+20

10

10

10

10

10

10

+10

+10

-20

240 SIGNAL FEED

Fig. 3B

200

-20

-10

0

+10

+20

-10

0

+10

0

10

10

10

10

10

10

10

10

-20

-10

0

240 SIGNAL FEED

Fig. 3C

200

0

+10

+20

0

+10

+20

0

+10

+20

10

10

10

10

10

10

10

10

240 SIGNAL FEED

Fig. 3D

200

236

234 (T2)

232 (T2)

222 (T2)

(T1)

406

404 (T1)

402 (T1)

240 SIGNAL FEED

224 (T2) 226

214 (T2) 216

212 (T2)

$$210 = \begin{cases} 212 \\ 214 \\ 216 \end{cases}$$

$$220 = \begin{cases} 222 \\ 224 \\ 226 \end{cases}$$

$$230 = \begin{cases} 232 \\ 234 \\ 236 \end{cases}$$

Fig. 4

224

222 (T2)

212 (T2) 214

(T1)

404

240 SIGNAL FEED

Fig. 5A

224

222 (T2)

212 (T2) 214

(T1)

404

(T1)

402

240 SIGNAL FEED

Fig. 5B

200

236

234

T2

232

T2

222

224

T2

212

T1

214

T1

226

T1

216

240 SIGNAL FEED

Fig. 5C

$210 = \begin{cases} 212 \\ 214 \\ 216 \end{cases}$

$220 = \begin{cases} 222 \\ 224 \\ 226 \end{cases}$

$230 = \begin{cases} 232 \\ 234 \\ 236 \end{cases}$

200

234

232

T2

T1

236

222

T2

T2

224

T1

T1

226

212

214

T2

216

T1

240 SIGNAL FEED

Fig. 5D

$210 = \begin{cases} 212 \\ 214 \\ 216 \end{cases}$

$220 = \begin{cases} 222 \\ 224 \\ 226 \end{cases}$

$230 = \begin{cases} 232 \\ 234 \\ 236 \end{cases}$

200

232 234 236

222 224 226

212 214 216

240 SIGNAL FEED

540 SECOND SIGNAL FEED

210 = { 212 214 216

220 = { 222 224 226

230 = { 232 234 236

Fig. 5E

610 ACQUIRING AN INPUT SIGNAL FOR AN ANTENNA ARRAY COMPRISING ANTENNA ELEMENT SUB-GROUPS

620 PROVIDING THE INPUT SIGNAL TO EACH SUB-GROUP

630 INPUTTING THE INPUT SIGNAL TO A FIRST ANTENNA ELEMENT WITHIN EACH SUB-GROUP

640 INPUTTING THE INPUT SIGNAL TO A SECOND ANTENNA ELEMENT WITHIN EACH SUB-GROUP VIA THE FIRST ANTENNA ELEMENT, THE INPUT SIGNAL HAVING A DIFFERENT PHASE

650 OUTPUTTING THE INPUT SIGNAL

Fig. 6

710 PROVIDING AN ANTENNA ARRAY FOR GENERATING RADIO BEAMS, THE ANTENNA ARRAY COMPRISING ANTENNA ELEMENT SUB-GROUPS

↓

720 PROVIDING A SIGNAL FEED ELEMENT FOR PROVIDING AN INPUT SIGNAL

↓

730 ELECTRICALLY CONNECTING THE ANTENNA ELEMENT SUB-GROUPS TO THE SIGNAL INPUT ELEMENT

↓

740 ELECTRICALLY CONNECTING PLURALITY OF ANTENNA ELEMENTS OF EACH ANTENNA ELEMENT SUB-GROUP TO EACH OTHER IN A CONSECUTIVE MANNER

↓

750 PROVIDING A PLURALITY OF PHASE SHIFT ELEMENTS BETWEEN THE CONSECUTIVELY ELECTRICALLY CONNECTED ANTENNA ELEMENTS FOR SHIFTING A PHASE OF THE INPUT SIGNAL

Fig. 7

200

840 USER INTERFACE

820 RADIO INTERFACE

810 PROCESSING CIRCUITRY

860 ANTENNA ARRAY

830 MEMORY

832 SOFTWARE

834 DATABASE

Fig. 8

Europäisches
Patentamt

European
Patent Office

Office européen
des brevets

# EUROPEAN SEARCH REPORT

Application Number

EP 16 18 4190

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/298421 A1 (ANDERSSON MATS H [SE] ET AL) 3 December 2009 (2009-12-03) * paragraph [0030] - paragraph [0035]; figure 5 * | 1-15 | INV. H01Q21/06 H01Q3/30 ADD. H01Q1/24 |
| X A | US 3 995 277 A (OLYPHANT JR MURRAY) 30 November 1976 (1976-11-30) * column 10, line 5 - line 47; figure 6 * | 1-3,6-9, 13-15 4,5, 10-12 | |
| X A | US 2004/185793 A1 (BORLEZ YVES [BE] ET AL) 23 September 2004 (2004-09-23) * paragraph [0035] - paragraph [0047]; figure 3 * | 1-3,6-9, 13-15 4,5, 10-12 | |
| X A | US 5 210 541 A (HALL PETER [GB] ET AL) 11 May 1993 (1993-05-11) * column 3, line 10 - column 5, line 15; figures 5-7 * | 1-4, 7-11, 13-15 5,6,12 | |

TECHNICAL FIELDS SEARCHED (IPC)

H01Q

The present search report has been drawn up for all claims

| Place of search | Date of completion of the search | Examiner |
|---|---|---|
| The Hague | 2 February 2017 | Sípal, Vít |

EPO FORM 1503 03.82 (P04C01)

## ANNEX TO THE EUROPEAN SEARCH REPORT
## ON EUROPEAN PATENT APPLICATION NO.

EP 16 18 4190

This annex lists the patent family members relating to the patent documents cited in the above-mentioned European search report.
The members are as contained in the European Patent Office EDP file on
The European Patent Office is in no way liable for these particulars which are merely given for the purpose of information.

02-02-2017

| Patent document cited in search report | | Publication date | Patent family member(s) | | Publication date |
|---|---|---|---|---|---|
| US 2009298421 | A1 | 03-12-2009 | BR | PI0520358 A2 | 13-06-2009 |
| | | | CA | 2611593 A1 | 11-01-2007 |
| | | | CN | 101218710 A | 09-07-2008 |
| | | | EP | 1900063 A1 | 19-03-2008 |
| | | | JP | 4746098 B2 | 10-08-2011 |
| | | | JP | 2008545329 A | 11-12-2008 |
| | | | KR | 20080028383 A | 31-03-2008 |
| | | | US | 2009298421 A1 | 03-12-2009 |
| | | | WO | 2007004932 A1 | 11-01-2007 |
| US 3995277 | A | 30-11-1976 | NONE | | |
| US 2004185793 | A1 | 23-09-2004 | CN | 1412890 A | 23-04-2003 |
| | | | DE | 60133007 T2 | 19-03-2009 |
| | | | EP | 1304764 A1 | 23-04-2003 |
| | | | EP | 1832895 A2 | 12-09-2007 |
| | | | ES | 2300296 T3 | 16-06-2008 |
| | | | ES | 2341185 T3 | 16-06-2010 |
| | | | HK | 1057132 A1 | 22-08-2008 |
| | | | JP | 4021740 B2 | 12-12-2007 |
| | | | JP | 2003198247 A | 11-07-2003 |
| | | | KR | 20030032807 A | 26-04-2003 |
| | | | US | 2003076271 A1 | 24-04-2003 |
| | | | US | 2004185793 A1 | 23-09-2004 |
| US 5210541 | A | 11-05-1993 | DE | 69014607 D1 | 12-01-1995 |
| | | | DE | 69014607 T2 | 13-04-1995 |
| | | | EP | 0456680 A1 | 21-11-1991 |
| | | | JP | 2977893 B2 | 15-11-1999 |
| | | | JP | H04503133 A | 04-06-1992 |
| | | | US | 5210541 A | 11-05-1993 |
| | | | WO | 9009042 A1 | 09-08-1990 |

EPO FORM P0459

For more details about this annex : see Official Journal of the European Patent Office, No. 12/82